# EUROPÄISCHE PATENTSCHRIFT

(11) **EP 2 297 047 B1**
(45) Veröffentlichungstag und Bekanntmachung des Hinweises auf die Patenterteilung: **26.09.2012**
(21) Anmeldenummer: 09753855.7
(22) Anmeldetag: 25.05.2009
(51) Int. Cl.: C02F 3/10, C02F 3/12

(54) **VORRICHTUNG ZUM REINIGEN VON ABWASSER**
APPARATUS FOR CLEANING SEWAGE
DISPOSITIF D'ÉPURATION DES EAUX USÉES

(30) Priorität: 30.05.2008 DE 102008026206
(43) Veröffentlichungstag der Anmeldung: 23.03.2011
(73) Patentinhaber: INVENT Umwelt- und Verfahrenstechnik AG, 91058 Erlangen (DE)
(72) Erfinder: HÖFKEN, Marcus, 91054 Erlangen (DE); STEIDL, Walter, 90559 Burgthann (DE); HUBER, Peter, 92289 Ursensollen (DE)
(74) Vertreter: Gassner, Wolfgang
(86) Internationale Anmeldenummer: PCT/EP2009/056310
(87) Internationale Veröffentlichungsnummer: WO 2009/144200

(56) Entgegenhaltungen:
- WO-A1-91/16270
- DE-A1- 19 908 781
- DESJARDINS C ET AL: "Laboratory study of ballasted flocculation" WATER RESEARCH, ELSEVIER, AMSTERDAM, NL, Bd. 36, Nr. 3, 1. Februar 2002 (2002-02-01), Seiten 744-754, XP004312294 ISSN: 0043-1354
- "Actiflo mobile plant" 2007, XP002542079 online Gefunden im Internet: URL:http://www.veoliawaterst.com/actiflo/e n/actiflo_mobile_plant.htm> [gefunden am 2009-08-19]

## Beschreibung

Die Erfindung betrifft eine Vorrichtung zum Reinigen von Abwasser nach dem Oberbegriff des Anspruchs 1.

Eine solche Vorrichtung ist aus der US 4,687,574 bekannt. Dabei gelangt das Abwasser von einem Eingangstank nacheinander in eine erste und eine zweite Flockulationskammer, in denen jeweils Flockulationschemikalien enthalten sind. Von der zweiten Flockulationskammer wird die Flüssigkeit sodann über einen Lamellenabscheider geführt und in einem stromabwärts vorgesehenen Klarwasserbehälter gesammelt. Die bekannte Vorrichtung weist keine besonders gute Reinigungsleistung auf. Überdies muss zu deren Betrieb das Abwasser mit Flockulationschemikalien versehen werden, welche das Klarwasser verunreinigen. Der Einsatz von Flockulationschemikalien verursacht schließlich einen erhöhten Aufwand.

Aus der US 2005/0274669 A1 ist eine weitere Vorrichtung zur Abwasserbehandlung bekannt. Die Vorrichtung kann in einem Container integriert werden und ist transportfähig. Zum Reinigen von Abwasser umfasst die bekannte Vorrichtung einen Bioreaktor, der mit einer Membran zum Trennen von sauberem Wasser und Schlamm versehen ist.

Eine aus der DE 39 29 510 C2 bekannte Kläranlage besteht aus Abschnitten, von denen jeder eine Vielzahl von Kammern aufweist. Die Kammern können durch verschließbare Öffnungen variabel miteinander verbunden werden. Damit kann die Kläranlage an unterschiedliche Abwassermengen und -qualitäten angepasst und ein- oder mehrstufig betrieben werden.

Eine weitere transportable Kläranlage ist aus der DE 295 02 118 U1 bekannt. Sie ist in einem Container untergebracht und umfasst mehrere Behälter, die je nach Einsatzanforderung mit geeigneten Aggregaten verbunden werden können. Dabei können verschiedene Prozessstufen der Abwasserbehandlung durchgeführt werden.

Aus der WO 03/055808 A1 ist eine Vorrichtung zur Behandlung von Abwasser von Klärgruben bekannt. Die Vorrichtung weist einen Einlasskanal, eine Hauptklärkammer und einen Auslasskanal auf.

Die DE 10 2005 017 948 A1 beschreibt eine Vorrichtung zum Aufbereiten von Abwasser für Wäschereien. Die Vorrichtung besteht aus einem ersten mobilen Container und einem zweiten mobilen Container. Einer der Container dient als Speichercontainer, der andere als Verfahrenscontainer und weist einen Bioreaktor auf.

Das Dokument WO 91/16270 offenbart eine weitere aus der Stand der Technik bekannte Kläranlage.

Die bekannten transportablen Vorrichtungen zur Behandlung von Abwasser haben in der Regel keine besonders gute Reinigungsleistung.

Aufgabe der Erfindung ist es, die Nachteile nach dem Stand der Technik zu beseitigen. Es soll insbesondere eine transportable Vorrichtung zum Reinigen von Abwasser angegeben werden, welche eine verbesserte Reinigungsleistung aufweist.

Diese Aufgabe wird durch die Merkmale des Anspruchs 1 gelöst. Zweckmäßige Ausgestaltungen der Erfindung ergeben sich aus den Merkmalen der Ansprüche 2 bis 18.

Nach Maßgabe der Erfindung ist vorgesehen, dass das Klarwasserbecken zwischen dem Lamellenabscheider und der ersten Abteilung angeordnet ist. - Die vorgeschlagene Anordnung ermöglicht es, das durch die Form konventioneller Container vorgegebene beschränkte Platzangebot optimal auszunutzen. Infolge der vorgeschlagenen Anordnung ist es möglich, die Behandlungsbecken sowie den Lamellenabscheider groß und damit besonders effektiv auszugestalten. Damit kann auf einfache und kostengünstige Weise eine verbesserte Reinigungsleistung erzielt werden.

Indem das Gehäuse in Form eines transportablen Containers, nämlich eines Containers herkömmlicher Abmessungen, ausgestaltet ist, lässt sich die vorgeschlagene Vorrichtung mit zum Containertransport hergerichteten herkömmlichen Verkehrsmitteln, wie LKW, Schiff, Flugzeug, Bahn, kostengünstig transportieren. Damit eignet sich die vorgeschlagene Vorrichtung beispielsweise zum Einsatz auf abgelegenen Großbaustellen, in Ortschaften ohne Kläranlage, in Krisenfällen und dgl..

Nach einer vorteilhaften Ausgestaltung ist im Behälter eine Strömungsleiteinrichtung zum im Wesentlichen vertikal nach oben gerichteten Beschicken des Lamellenabscheiders vorgesehen. Mit der Strömungsleiteinrichtung wird eine in den Behälter eintretende im Wesentlichen horizontale Strömung in eine im Wesentlichen vertikale Strömung umgelenkt. Bei der Strömungsleiteinrichtung kann es sich um im Wesentlichen horizontal verlaufende Rohre handeln, welche mit davon vertikal sich erstreckenden Rohrstutzen versehen sind. Anstelle der Rohrstutzen können die Rohre auch einfach zum Lamellenabscheider hinweisende Durchbrüche aufweisen. Es können auch andere Strömungsleiteinrichtungen, beispielsweise zum Lamellenabscheider hin gerichtete gebogene oder geneigte Bleche, Rinnen oder Kanäle können vorgesehen sein.

Nach einer weiteren Ausgestaltung sind an einem oberen Ende des Lamellenabscheiders senkrecht zu den Längskanten der Lamellen sich erstreckende Überlaufrinnen zum Aufnehmen und Abführen des Klarwassers in das Klarwasserbecken vorgesehen. Das am oberen Ende des Lamellenabscheiders austretende Klarwasser steigt bis auf ein Niveau der seitlichen Kanten der Überlaufrinnen an und gelangt über die seitlichen Kanten in die Überlaufrinnen und von da in das Klarwasserbecken. Die vorgesehenen Überlaufrinnen dienen ähnlich wie die Strömungsleiteinrichtung einer Verlangsamung und Vergleichmäßigung der Strömung. Damit wird die Reinigungsleistung des Lamellenabscheiders verbessert.

Nach einer weiteren, besonders vorteilhaften Ausgestaltung ist das Klarwasserbecken oberhalb des Behälters vorgesehen. Damit kann die Vorrichtung besonders kompakt ausgestaltet werden. Das Klarwasserbecken ist in dieser Ausgestaltung etwa von der Größe des den stromaufwärts dem Lamellenabscheider vorgeordneten Behälters oder kleiner als der Behälter. Der durch die vorgeschlagene Ausgestaltung eingesparte Platz kann dazu verwendet werden, einen vergrößerten Lamellenabscheider und/oder vergrößerte Behandlungsbecken vorzusehen.

Vorteilhafterweise ist ferner eine Einrichtung zum Bestrahlen des im Klarwasserbecken aufgenommenen Klarwassers mit UV-Licht vorgesehen. Damit können im Klarwasser eventuell verbliebene Keime oder dgl. abgetötet werden.

In den Behandlungsbecken wird das Abwasser unter Verwendung geeigneter Bakterien biologisch gereinigt. Zu diesem Zweck können in den Behandlungsbecken, vorzugsweise aus Kunststoff hergestellte, Aufwuchskörper für Bakterien aufgenommen sein. Derartige Aufwuchskörper sind nach dem Stand der Technik allgemein bekannt. Es handelt sich dabei um lose Körper, welche durch die im Behandlungsbecken herrschende Strömung nach Art eines Fließbetts bewegt werden können.

Zur Erhöhung der Effizienz der durch die Bakterien bewirkten Reinigung ist in zumindest einem der Behandlungsbecken, vorzugsweise in sämtlichen Behandlungsbecken, eine Belüftungseinrichtung vorgesehen. Dabei kann es sich um herkömmliche, auf den Boden der Behandlungsbecken abgestützte, mit Druckluft beaufschlagte Schläuche oder Rohre handeln, welche mit Durchbrüchen versehen sind. Die Rohre oder Schläuche sowie die darin vorgesehenen Durchbrüche sind so angeordnet, dass eine möglichst gleichmäßige Belüftung des jeweiligen Behandlungsbeckens erreicht wird.

Zweckmäßigerweise ist an einer ersten Schmalseite des Gehäuses eine an die erste Abteilung angrenzende dritte Abteilung vorgesehen, in der eine Fördereinrichtung zum Fördern des zu behandelnden Abwassers und/oder eine Drucklufterzeugungseinrichtung zum Versorgen der Belüftungseinrichtung mit Druckluft aufgenommen ist/sind. Bei der Fördereinrichtung handelt es sich zweckmäßigerweise um zumindest eine herkömmliche Pumpe, welche zum Pumpen des zu behandelnden Abwassers geeignet ist.

Nach einer weiteren Ausgestaltung kann auch an einer zweiten Schmalseite des Gehäuses eine an die zweite Abteilung angrenzende vierte Abteilung vorgesehen sein, in der eine weitere Fördereinrichtung zum Fördern des zu behandelnden Abwassers und/oder eine weitere Drucklufterzeugungseinrichtung zum Versorgen der Belüftungseinrichtung mit Druckluft aufgenommen ist/sind. Die in der vierten Abteilung vorgesehenen Aggregate dienen insbesondere zum Erzeugen einer geeigneten Strömung durch den Lamellenabscheider, zum Reinigen des Behälters und/oder des Lamellenabscheiders sowie zum Abpumpen von Klarwasser und dgl..

Zweckmäßigerweise sind an der ersten und/oder zweiten Schmalseite zumindest eine Türe zum Öffnen der dritten und/oder der vierten Abteilung vorgesehen. Solche Türen ermöglichen einen einfachen Zugang zur dritten und/oder vierten Abteilung und damit eine besonders leichte Wartung und/oder Reparatur der zum Betrieb der Vorrichtung erforderlichen Aggregate.

Nach einer weiteren Ausgestaltung sind die Abteilungen durch im Wesentlichen parallel zu den Schmalseiten des Gehäuses verlaufende erste Trennwände voneinander abgeteilt. Insbesondere die zwischen der ersten und dritten Abteilung sowie die zwischen der zweiten und vierten Abteilung vorgesehenen ersten Trennwände weisen keine Durchbrüche auf. Dagegen weist die zwischen der ersten und zweiten Abteilung vorgesehene erste Trennwand in der Nähe des Bodens des Gehäuses einen oder mehrere Durchbrüche zur Verbindung mit dem in der zweiten Abteilung vorgesehenen Behälter auf.

Die in der ersten Abteilung vorgesehenen Behandlungsbecken sind zweckmäßigerweise durch im Wesentlichen parallel zu den Schmalseiten des Gehäuses verlaufende zweite Trennwände voneinander abgeteilt. Dabei weisen die zweiten Trennwände Durchbrüche zum Durchleiten des Abwassers von einem Behandlungsbecken in das stromabwärts nachfolgende Behandlungsbecken auf. Die Durchbrüche sind dabei in den in Stromrichtung aufeinanderfolgenden zweiten Trennwänden wechselweise in der Nähe des Bodens und in der Nähe einer dem Boden gegenüberliegenden Decke des Gehäuses vorgesehen, so dass sich für das Abwasser durch die Behandlungsbecken ein möglichst langer Strömungsweg ergibt. Die zweiten Trennwände haben außerdem die Funktion, die Behandlungsbecken voneinander im Wesentlichen zu trennen, so dass darin eine Behandlung des Abwassers mit unterschiedlichen Bakterien möglich ist. Die Vorrichtung kann zwei, drei, vier oder noch mehr Behandlungsbecken aufweisen.

Die Abteilungen erstrecken sich zweckmäßigerweise über die gesamte Breite des Gehäuses. Die Abteilungen sind also des Weiteren durch Längswände des Gehäuses sowie dessen Boden begrenzt.

Nach einer besonderen Ausgestaltung der Erfindung ist vorgesehen, dass das Klarwasserbecken durch eine im Wesentlichen parallel zu den Lamellen des Lamellenabscheiders verlaufende und schräg zur gegenüberliegenden ersten Trennwand gerichtete dritte Trennwand begrenzt wird. Die dritte Trennwand korrespondiert in ihrer Schrägstellung zur Form des Lamellenabscheiders. Damit kann weiter die kompakte Bauform der vorgeschlagenen Vorrichtung erhöht werden.

Nach einer weiteren vorteilhaften Ausgestaltung ist im Behälter eine Aufwirbeleinrichtung zum Aufwirbeln von Schlamm vorgesehen. Eine solche Aufwirbeleinrichtung wird dann in Betrieb genommen, wenn der Behälter gereinigt werden soll. Bei der Aufwirbeleinrichtung kann es sich zweckmäßigerweise um eine weitere Belüftungseinrichtung handeln. Die weitere Belüftungseinrichtung kann mit einem derartigen Luftdruck beaufschlagt werden, dass darüber befindlicher Schlamm aufgewirbelt und in Suspension gebracht werden kann. Die Suspension kann nachfolgend durch eine gesondert vorgesehene Entsorgungsöffnung abgeführt werden.

Nach einer weiteren Ausgestaltung ist eine Steuereinrichtung zum Steuern der Förder- und/oder Belüftungseinrichtungen nach einem vorgegebenen Programm vorgesehen. Damit ist es möglich, die in der Vorrichtung aufgenommenen Aggregate in aufeinander abgestimmten Weise so zu betreiben, dass das jeweils zu behandelnde Abwasser optimal gereinigt wird. In dem Programm kann beispielsweise auch ein "Reinigungsmodus" vorgesehen sein, mit dem bei Bedarf im Behälter befindlicher Schlamm aufgewirbelt und aus der Vorrichtung abgeführt wird.

Schließlich können in einer im Boden des Gehäuses gegenüberliegenden Decke verschließbare Revisionsluken vorgesehen sein. Derartige Revisionsluken ermöglichen einen Zutritt zu den jeweiligen Behandlungsbecken zu Reparatur- und/oder Wartungszwecken.

Nachfolgend werden Ausführungsbeispiele der Erfindung anhand der Zeichnungen näher erläutert. Es zeigen:
- Fig. 1: einen schematischen Längsschnitt durch eine Vorrichtung zum Reinigen von Abwasser und
- Fig. 2: eine weitere Schnittansicht gemäß der Schnittlinie A-A' in Fig. 1

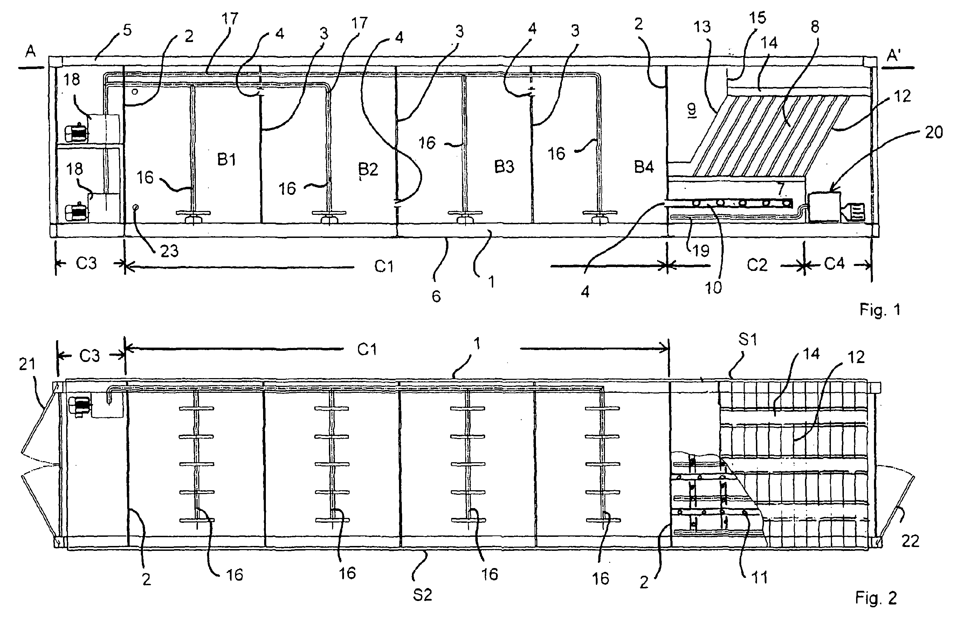

Bei der in den Fig. 1 und 2 gezeigten Vorrichtung ist ein Gehäuse 1 aus einem herkömmlichen transportablen Containers, welcher beispielsweise eine Länge von 40 Fuss aufweist, hergestellt. Das Gehäuse 1 ist durch erste Trennwände 2 in eine erste Abteilung C1, eine zweite Abteilung C2, eine dritte Abteilung C3 und eine vierte Abteilung C4 gegliedert. Die Abteilungen C1, C2, C3 und C4 sind in einer Längsrichtung des Gehäuses 1 hintereinander angeordnet. Die erste Abteilung C1 umfasst mehrere durch zweite Trennwände 3 voneinander abgeteilte Behandlungsbecken. Im vorliegenden Ausführungsbeispiel sind vier Behandlungsbecken B1, B2, B3 und B4 vorgesehen. Es ist auch möglich, weniger Behandlungsbecken, beispielsweise zwei oder drei, oder auch mehr Behandlungsbecken, beispielsweise fünf oder sechs, vorzusehen. Die Behandlungsbecken B1, B2, B3 oder B4 sind durch in den zweiten Trennwänden 3 vorgesehene erste Durchbrüche 4 miteinander verbunden. Dabei sind die ersten Durchbrüche 4 in den aufeinanderfolgenden zweiten Trennwänden 3 abwechselnd in der Nähe einer Decke 5 und eines Bodens 6 des Gehäuses 1 vorgesehen. Bei der vorgeschlagenen Vorrichtung nimmt die erste Abteilung C1 ein wesentliches Volumen des Gehäuses 1 ein. D.h. der von den Behandlungsbecken B1, B2, B3 und B4 umschlossene Raum ist größer als die zweite C2, dritte C3 und vierte Abteilung C4. Die erste Abteilung C1 kann mehr als das 2-fach, vorzugsweise mehr als das 3-fache des Volumens der zweiten Abteilung C2 aufweisen. Wegen des großen Volumens der ersten Abteilung C1 gelingt auch unter schwierigen klimatischen Bedingungen, beispielsweise Wüstenklima, eine besonders vollständige Reinigung von Abwasser.

Die ersten 2 und/oder zweiten Trennwände 3 erstrecken sich vorteilhafterweise von der einen Längswand S1 des Gehäuses 1 bis zu dessen anderer Längswand S2. Infolgedessen sind in der Vorrichtung also auch die Behandlungsbecken B1, B2, B3 und B4 in einer Strömungsrichtung des zu behandelnden Abwassers hintereinander im Gehäuse 1 angeordnet.

Stromabwärts des vierten Behandlungsbeckens B4 ist in der zweiten Abteilung C2 ein Behälter 7 vorgesehen, dem wiederum stromabwärts ein Lamellenabscheider 8 nachgeordnet ist. Mit dem Bezugszeichen 9 ist ein dem Lamellenabscheider 8 stromabwärts nachgeordnetes Klarwasserbecken bezeichnet. Das Klarwasserbecken 9 ist oberhalb des Behälters 7 in der zweiten Abteilung C2 angeordnet und grenzt an die erste Abteilung C1 an.

Im Behälter 7 ist eine Strömungsleiteinrichtung 10 vorgesehen, mit der das aus dem vierten Behandlungsbecken B4 abströmende, mit Schlamm beladene Abwasser in eine im Wesentlichen vertikal gerichtete Strömungsrichtung umgelenkt wird. Bei der Strömungsleiteinrichtung 10 kann es sich um Rohre, Loch- bzw. Leitbleche oder Kanäle handeln, welche sich in Längsrichtung im Behälter 7 erstrecken. Sie können über Querleitungen miteinander verbunden sein und zweite Durchbrüche 11 aufweisen, welche sich in Richtung des Lamellenabscheiders 8 öffnen.

Der Lamellenabscheider 8 umfasst eine Vielzahl parallel angeordneter Lamellen 12, deren Kanten im Wesentlichen parallel zu den ersten Trennwänden 2 angeordnet sind. Die Lamellen 12 sind bezüglich einer Vertikalrichtung schräg gestellt, so dass das Klarwasserbecken 9 durch eine im Wesentlichen parallel zu den Lamellen 12 verlaufende dritte Trennwand 13 begrenzt wird. Mit dem Bezugszeichen 14 sind am oberen Ende des Lamellenabscheiders 8 senkrecht zu den Längskanten der Lamellen 12 sich erstreckende Überlaufrinnen zum Aufnehmen und Abführen des Klarwassers in das Klarwasserbecken 9 vorgesehen. Mittels einer vierten Trennwand 15 wird sichergestellt, dass das aus den Lamellen 12 austretende Klarwasser lediglich über die Überlaufrinnen 14 in das Klarwasserbecken 9 abgeführt wird.

Oberhalb der Lamellen kann in der Decke 5 des Gehäuses 1 eine Revisionsluke (hier nicht gezeigt) vorgesehen sein, durch welche die vorzugsweise lösbar angeordneten Lamellen 12 und/oder die Überlaufrinnen 14 beispielsweise zu Reinigungszwecken herausgenommen werden können.

In jedem der Behandlungsbecken B1, B2, B3 und B4 ist eine Belüftungseinrichtung 16 vorgesehen, welche in der Nähe des Bodens 6 angeordnete Längs- und Querleitungen umfasst. Die Längs- und Querleitungen weisen zur Decke 5 gerichtete Durchbrüche (hier nicht gezeigt) zum Austritt von Luft auf. Die Belüftungseinrichtungen 16 sind über Luftzuführleitungen 17 mit Drucklufterzeugungsvorrichtungen 18 verbunden, welche beispielsweise in der dritten Abteilung C3 aufgenommen sind.

In der dritten Abteilung C3 kann ferner zumindest eine (hier nicht gezeigte) Pumpe zum Fördern des zu behandelnden Abwassers vom ersten Behandlungsbecken B1 in Richtung des Klarwasserbeckens 9 vorgesehen sein. In der zweiten Abteilung C2 ist eine weitere Belüftungseinrichtung 19 vorgesehen, welche mit einer weiteren Drucklufterzeugungsvorrichtung 20 verbunden ist. Die weitere Drucklufterzeugungsvorrichtung 20 kann in der vierten Abteilung C4 aufgenommen sein. Mit dem Bezugszeichen 21 sind erste Türen bezeichnet, durch welche die dritte Abteilung C3 zugänglich ist. Es kann sich dabei um die bei einem Container herkömmlicherweise vorgesehenen Türen handeln. Mit dem Bezugszeichen 22 ist eine zweite Tür bezeichnet, welche einen Zutritt zur vierten Abteilung C4 ermöglicht. Durch die endständig an den Schmalseiten des Gehäuses 1 vorgesehenen dritten C3 und vierten Abteilungen C4 ist eine leichte Zugänglichkeit zu den dort angeordneten Aggregaten zur Aufrechterhaltung eines Betriebs der Vorrichtung gewährleistet.

Die Decke 5 des Gehäuses 1 kann mit (hier nicht gezeigten) Revisionsluken zum Zugang der Behandlungsbecken B1, B2, B3, B4, des Klarwasserbeckens 9 sowie des Lamellenabscheiders 8 versehen sein. Ferner kann eine Einrichtung zum Bestrahlen (hier nicht gezeigt) des im Klarwasserbecken 9 aufgenommenen Klarwassers mit UV-Licht vorgesehen sein.

Die Funktion der Vorrichtung ist Folgende:

Das zu behandelnde Abwasser wird durch eine mit dem Bezugszeichen 23 bezeichnete Zulauföffnung in das erste Behandlungsbecken B1 gepumpt. In sämtlichen Behandlungsbecken B1, B2, B3 und B4 befinden sich (hier nicht gezeigte) Aufwuchskörper für Bakterien. Es handelt sich dabei um herkömmliche Kunststoffkörper, welche frei beweglich im zu behandelnden Abwasser schwimmen. Die Kunststoffkörper bilden ein Fließbett, welches durch die Belüftungseinrichtung 16 in Bewegung gehalten wird. Nach einer vorgegebenen Verweilzeit gelangt das so behandelte Abwasser vom ersten Behandlungsbecken B1 in das zweite B2, nachfolgend in das dritte B3 und dann in das vierte Behandlungsbecken B4. Dabei wird es nachfolgend mehreren Reinigungsstufen unterzogen. Im vierten Behandlungsbecken B4 ist das Abwasser nahezu frei von organischen Verunreinigungen. Der im Abwasser verbliebene Schlamm wird durch den stromabwärts nachgeschalteten Lamellenabscheider 8 abgetrennt. Das verbleibende Klarwasser wird im Klarwasserbecken 9 gesammelt. Eventuell verbliebene mikrobielle Verunreinigungen können dort mittels einer Einrichtung zum Bestrahlen mit UV-Licht abgetötet werden.

Zum Entfernen des sich im Behälter 7 absetzenden Schlamms kann dieser durch ein (hier nicht gezeigtes) Schlammabzugsrohr mit Hilfe einer (hier ebenfalls nicht gezeigten) Schlammabzugspumpe abgezogen werden. Das Abziehen des Schlamms kann in vorgegebenen Intervallen erfolgen. Die Schlammabzugspumpe ist zweckmäßigerweise in der vierten Abteilung C4 untergebracht.

Mit der weiteren Belüftungseinrichtung 19 ist es möglich, auf den Lamellen 12 befindlichen Schlamm aufzuwirbeln und abzulösen. Das dabei gebildete schlammbeladene Wasser kann über die Überlaufrinnen 14 und über eine (hier nicht gezeigte) besondere Schlammleitung abgeführt werden.

Sowohl der vom Boden des Behälters 7 abgezogene Schlamm als auch der über die Schlammleitung abgeführte Schlamm können in die Behandlungsbecken B1 bis B4 zurückgeführt werden. Zu diesem Zweck kann eine besondere (hier nicht gezeigte) Rückführschlammpumpe vorgesehen sein, welche beispielsweise in der vierten Abteilung C4 vorgesehen ist.

Die vorgeschlagene Vorrichtung zum Reinigen von Abwasser ist besonders kompakt aufgebaut. Indem das Klarwasserbecken 9 zwischen dem Lamellenabscheider 8 und der ersten Abteilung C1 vorgesehen ist, kann der damit gewonnene Raum zur Vergrößerung des Lamellenabscheiders 8 und/oder der Behandlungsbecken B1, B2, B3, B4 verwendet werden. Infolgedessen zeichnet sich die vorgeschlagene Vorrichtung zum Reinigen von Abwasser durch eine besonders hohe Reinigungsleistung aus.

Die vorstehend als "Trennwände" bezeichneten Bestandteile der Vorrichtung haben nicht nur die Funktion, die Behandlungsbecken bzw. Abteilungen voneinander zu trennen, sondern auch die Funktion, das Gehäuse zu versteifen. Zu diesem Zweck können die Trennwände beispielsweise durch Stege und/oder eine geeignete Materialstärke entsprechend steif ausgebildet sein.

### Bezugszeichenliste

- 1: Gehäuse
- 2: erste Trennwand
- 3: zweite Trennwand
- 4: erster Durchbruch
- 5: Decke
- 6: Boden
- 7: Behälter
- 8: Lamellenabscheider
- 9: Klarwasserbecken
- 10: Strömungsleiteinrichtung
- 11: zweiter Durchbruch
- 12: Lamelle
- 13: dritte Trennwand
- 14: Überlaufrinne
- 15: vierte Trennwand
- 16: Belüftungseinrichtung
- 17: Luftzuführleitung
- 18: Drucklufterzeugungseinrichtung
- 19: weitere Belüftungseinrichtung
- 20: weitere Drucklufterzeugungseinrichtung
- 21: erste Tür
- 22: zweite Tür
- 23: Zulauföffnung

- B1, B2, B3, B4: Behandlungsbecken
- C1: erste Abteilung
- C2: zweite Abteilung
- C3: dritte Abteilung
- C4: vierte Abteilung
- S1: Längswand
- S2: andere Längswand

## Patentansprüche

1. Vorrichtung zum Reinigen von Abwasser,
mit einem in Form eines transportablen Containers ausgebildeten Gehäuse (1) mit im Wesentlichen rechteckigem Grundriss,
wobei entlang einer Längsrichtung des Grundrisses hintereinander mehrere Abteilungen (C1, C2, C3, C4) vorgesehen sind,
wobei in einer ersten Abteilung (C1) zumindest zwei Behandlungsbecken (B1, B2, B3, B4) und in einer sich daran anschließenden zweiten Abteilung (C2) ein Behälter (7) vorgesehen ist, dem stromabwärts nacheinander ein eine Vielzahl parallel angeordnete Lamellen (12) aufweisender Lamellenabscheider (8) und ein Klarwasserbecken (9) nachgeordnet sind,
wobei das Klarwasserbecken (9) zwischen dem Lamellenabscheider (8) und der ersten Abteilung (C1) angeordnet ist,
**dadurch gekennzeichnet, dass**
an einem oberen Ende des Lammellenabscheiders (8) senkrecht zu den Längskanten der Lamellen (12) sich erstreckende Überlaufrinnen (14) zum Aufnehmen und Abführen des Klarwassers in das Klarwasserbecken (9) vorgesehen sind, und wobei ferner eine vierte Trennwand (15) vorgesehen ist, mit der sichergestellt wird, dass das aus den Lamellen (12) austretende Klarwasser lediglich über die Überlaufrinnen (14) in das Klarwasserbecken (9) abgeführt wird.

2. Vorrichtung nach Anspruch 1, wobei im Behälter (7) eine Strömungsleiteinrichtung (10) zum im Wesentlichen vertikal nach oben gerichteten Beschicken des Lamellenabscheiders (8) vorgesehen ist.

3. Vorrichtung nach einem der vorhergehenden Ansprüche, wobei eine Einrichtung zum Bestrahlen des im Klarwasserbecken (9) aufgenommenen Klarwassers mit UV-Licht vorgesehen ist.

4. Vorrichtung nach einem der vorhergehenden Ansprüche, wobei in den Behandlungsbecken (B1, B2, B3, B4), vorzugsweise aus Kunststoff hergestellte, Aufwuchskörper für Bakterien aufgenommen sind.

5. Vorrichtung nach einem der vorhergehenden Ansprüche, wobei in zumindest einem der Behandlungsbecken (B1, B2, B3, B4) eine Belüftungseinrichtung (16) vorgesehen ist.

6. Vorrichtung nach einem der vorhergehenden Ansprüche, wobei an einer ersten Schmalseite des Gehäuses (1) ein an die erste Abteilung (C1) angrenzende dritte Abteilung (C3) vorgesehen ist, in der eine Fördereinrichtung zum Fördern des zu behandelnden Abwassers und/oder eine Drucklufterzeugungseinrichtung (18) zum Versorgen der Belüftungseinrichtung (16) mit Druckluft aufgenommen ist/sind.

7. Vorrichtung nach einem der vorhergehenden Ansprüche, wobei an einer zweiten Schmalseite des Gehäuses (1) eine an die zweite Abteilung (C2) angrenzende vierte Abteilung (C4) vorgesehen ist, in dem eine weitere Fördereinrichtung zum Fördern des zu behandelnden Abwassers und/oder eine weitere Drucklufterzeugungseinrichtung (20) zum Versorgen der Belüftungseinrichtung (16) oder einer weiteren Belüftungseinrichtung (19) mit Druckluft aufgenommen ist/sind.

8. Vorrichtung nach einem der vorhergehenden Ansprüche, wobei an der ersten und/oder zweiten Schmalseite zumindest eine Türe (21, 22) zum Öffnen der dritten (C3) und/oder vierten Abteilung (C4) vorgesehen ist.

9. Vorrichtung nach einem der vorhergehenden Ansprüche, wobei die Abteilungen (C1, C2, C3, C4) durch im Wesentlichen parallel zu den Schmalseiten des Gehäuses (1) verlaufende erste Trennwände (2) voneinander abgeteilt sind.

10. Vorrichtung nach einem der vorhergehenden Ansprüche, wobei die in der ersten Abteilung (C1) vorgesehenen Behandlungsbecken (B1, B2, B3, B4) durch im Wesentlichen parallel zu den Schmalseiten des Gehäuses (1) verlaufende zweite Trennwände (3) voneinander abgeteilt sind.

11. Vorrichtung nach einem der vorhergehenden Ansprüche, wobei die Abteilungen (C1, C2, C3, C4) des Weiteren durch Längswände (S1, S2) des Gehäuses (1) und dessen Boden (6) begrenzt werden.

12. Vorrichtung nach einem der vorhergehenden Ansprüche, wobei das Klarwasserbecken (9) durch eine im Wesentlichen parallel zu den Lamellen (12) des Lamellenabscheiders (8) verlaufende und schräg zur gegenüberliegenden ersten Trennwand (2) gerichtete dritte Trennwand (13) begrenzt wird.

13. Vorrichtung nach einem der vorhergehenden Ansprüche, wobei im Behälter (7) eine Aufwirbeleinrichtung zum Aufwirbeln von Schlamm vorgesehen ist.

14. Vorrichtung nach einem der vorhergehenden Ansprüche, wobei die Aufwirbeleinrichtung die weitere Belüftungseinrichtung (19) ist.

15. Vorrichtung nach einem der vorhergehenden Ansprüche, wobei eine Steuereinrichtung zum Steuern der Förder- und/oder Belüftungseinrichtungen (16, 19) nach einem vorgegebenen Programm vorgesehen ist.

16. Vorrichtung nach einem der vorhergehenden Ansprüche, wobei in einer dem Boden (6) des Gehäuses (1) gegenüberliegenden Decke (5) verschließbare Revisionsluken vorgesehen sind.

## Claims

1. Device for the purification of waste water,
with a housing (1) shaped in the form of a transportable container having an essentially rectangular layout,
wherein a plurality of compartments (C1 C2, C3, C4) are provided one after the other along a longitudinal direction of the layout,
wherein at least two processing basins (B1, B2, B3, B4) are provided in a first compartment (C1) and one container (7) is provided in an adjacent second compartment (C2), wherein a lamella separator (8) having a plurality of parallel lamella (12) and a clear water basin (9) are located in succession downstream after said container (7),
wherein the clear water basin (9) is located between the lamella separator (8) and the first compartment (C1),
**characterized in that**
overflow troughs (14) for collecting and leading off the clear water into the clear water basin (9) are provided, which overflow troughs (14) are located at an upper end of the lamella separator (8) and extend perpendicularly to the longitudinal edges of the lamella (12), and wherein moreover a fourth separating wall (15) is provided with which it is ensured that the clear water leaving the lamella (12) is only led away to the clear water basin (9) via the overflow troughs (14).

2. Device as defined in claim 1, wherein a current guidance device (10) is provided in the container (7) for the essentially vertical, upward directed loading of the lamella separator (8).

3. Device as defined in one of the preceding claims, wherein a device for radiating with UV light the clear water contained in the clear water basin (9) is provided.

4. Device as defined in one of the preceding claims, wherein culture bodies for bacteria, preferably made of plastic, are contained in the processing basins (B1, B2, B3, B4).

5. Device as defined in one of the preceding claims, wherein an aeration device (16) is provided in at least one of the processing basins (B1, B2, B3, B4).

6. Device as defined in one of the preceding claims, wherein, on a first narrow side of the housing (1), a third compartment (C3) bordering on the first compartment (C1) is provided in which a conveyor device to convey the waste water to be processed and/or a compressed air generating device (18) to supply the aeration device (16) with compressed air is/are contained.

7. Device as defined in one of the preceding claims, wherein, on a second narrow side of the housing (1), a fourth compartment (C4) bordering on the second compartment (C2) is provided in which a further conveyor device to convey the waste water to be processed and/or a further compressed air generating device (20) to supply the aeration device (16) or a further aeration device (19) with compressed air is/are contained.

8. Device as defined in one of the preceding claims, wherein, on the first and/or second narrow side, at least one door (21, 22) for opening the third (C3) and/or fourth compartment (C4) is provided.

9. Device as defined in one of the preceding claims, wherein the compartments (C1, C2, C3, C4) are separated from one another by first separating walls (2) running essentially parallel to the narrow sides of the housing (1).

10. Device as defined in one of the preceding claims, wherein the processing basins (B1, B2, B3, B4) provided in the first compartment (C1) are separated from one another by second separating walls (3) running essentially parallel to the narrow sides of the housing (1).

11. Device as defined in one of the preceding claims, wherein furthermore the compartments (C1, C2, C3, C4) are limited by longitudinal walls (S1 S2) of the housing (1) and its bottom (6).

12. Device as defined in one of the preceding claims, wherein the clear water basin (9) is limited by a third separating wall (13) running essentially parallel to the lamella (12) of the lamella separator (8) and pointing at an angle to the first separating wall (2) located opposite.

13. Device as defined in one of the preceding claims, wherein a swirling device to swirl the sludge is provided in the container (7).

14. Device as defined in one of the preceding claims, wherein the swirling device is the further aeration device (19).

15. Device as defined in one of the preceding claims, wherein a control device for controlling the conveyor and/or aeration devices (16, 19) according to a predetermined program is provided.

16. Device as defined in one of the preceding claims, wherein closable overhaul hatches are provided in a ceiling (5) opposite the bottom (6) of the housing (1).

## Revendications

1. Dispositif d'épuration d'eaux usées,
avec une enveloppe (1) réalisée sous forme d'un conteneur transportable de plan essentiellement rectangulaire,
où plusieurs compartiments (C1, C2, C3, C4) disposés en série sont prévus suivant un sens longitudinal du plan,
où au moins deux bassins de traitement (B1, B2, B3, B4) sont prévus dans un premier compartiment (C1) et dans un deuxième compartiment (C2) lui étant contigu est prévu un réservoir (7) où sont disposés successivement en aval un séparateur à lamelles (8) présentant une multitude de lamelles (12) disposées parallèlement et un bassin d'eau claire (9),
où le bassin d'eau claire (9) est disposé entre le séparateur à lamelles (8) et le premier compartiment (C1),
**caractérisé en ce que**
des goulottes de trop-plein (14) s'étendant à une extrémité supérieure du séparateur à lamelles (8) perpendiculairement par rapport aux bords longitudinaux des lamelles (12) sont prévues pour recueillir et évacuer l'eau claire dans le bassin d'eau claire (9) et où, en outre, une quatrième cloison (15) est prévue qui permet d'assurer que l'eau claire sortant des lamelles (12) est évacuée uniquement via les goulottes de trop-plein (14) dans le bassin d'eau claire (9).

2. Dispositif selon la revendication 1, où une unité de guidage de l'écoulement (10) pour le chargement dirigé essentiellement verticalement vers le haut du séparateur à lamelles (8) est prévue dans le réservoir (7).

3. Dispositif selon l'une des revendications précédentes, où un équipement est prévu pour l'irradiation à la lumière UV de l'eau claire recueillie dans le bassin d'eau claire (9).

4. Dispositif selon l'une des revendications précédentes, où des corps de culture pour des bactéries, réalisés de préférence en matière plastique, sont recueillis dans les bassins de traitement (B1, B2, B3, B4).

5. Dispositif selon l'une des revendications précédentes, où un dispositif d'aération (16) est prévu dans au moins un des bassins de traitement (B1, B2, B3, B4).

6. Dispositif selon l'une des revendications précédentes, où est prévu sur un premier petit côté de l'enveloppe (1) un troisième compartiment (C3) adjacent au premier compartiment (C1) dans lequel est/sont logé(s) un convoyeur pour convoyer les eaux usées à traiter et/ou un compresseur d'air comprimé (18) pour l'alimentation en air comprimé du dispositif d'aération (16).

7. Dispositif selon l'une des revendications précédentes, où est prévu sur un deuxième petit côté de l'enveloppe (1) un quatrième compartiment (C4) adjacent au deuxième compartiment (C2) dans lequel est/sont logé(s) un autre convoyeur pour convoyer les eaux usées à traiter et/ou un autre compresseur d'air comprimé (20) pour l'alimentation en air comprimé du dispositif d'aération (16) ou d'un autre dispositif d'aération (19).

8. Dispositif selon l'une des revendications précédentes, où au moins une porte (21, 22) est prévue sur le premier et/ou le deuxième petit côté pour ouvrir le troisième (C3) et/ou le quatrième compartiment (C4).

9. Dispositif selon l'une des revendications précédentes, où les compartiments (C1, C2, C3, C4) sont séparés les uns des autres par des premières cloisons (2) étant essentiellement parallèles aux petits côtés de l'enveloppe (1).

10. Dispositif selon l'une des revendications précédentes, où les bassins de traitement (B1, B2, B3, B4) prévus dans le premier compartiment (C1) sont séparés les uns des autres par des secondes cloisons (3) étant essentiellement parallèles aux petits côtés de l'enveloppe (1).

11. Dispositif selon l'une des revendications précédentes, où les compartiments (C1, C2, C3, C4) sont en outre délimités par des parois longitudinales (S1, S2) de l'enveloppe (1) et de son fond (6).

12. Dispositif selon l'une des revendications précédentes, où le bassin d'eau claire (9) est délimité par une troisième cloison (13) orientée essentiellement parallèlement aux lamelles (12) du séparateur à lamelles (8) et étant inclinée par rapport à la première cloison (2) opposée.

13. Dispositif selon l'une des revendications précédentes, où un dispositif tourbillonnaire est prévu dans le réservoir (7) pour faire tourbillonner les boues.

14. Dispositif selon l'une des revendications précédentes, où le dispositif tourbillonnaire est l'autre dispositif d'aération (19).

15. Dispositif selon l'une des revendications précédentes, où un dispositif de commande pour commander les convoyeurs et/ou les dispositifs d'aération (16, 19) est prévu selon un programme prédéfini.

16. Dispositif selon l'une des revendications précédentes, où des trappes de visite verrouillables sont prévues dans une paroi supérieure (5) opposée au fond (6) de l'enveloppe (1).
